# EUROPEAN PATENT APPLICATION

(11) **EP 0 868 043 A2**
(43) Date of publication of application: **30.09.1998**
(21) Application number: 98300680.0
(22) Date of filing: 30.01.1998
(51) Int. Cl.: H04J 14/02, H04B 10/148

(54) **Multiplexed optical transmission systems**

(30) Priority: 26.03.1997 US 824579
(71) Applicant: NORTHERN TELECOM LIMITED, Montreal, Quebec H2Y 3Y4 (CA)
(72) Inventor: Epworth, Richard Edward, Sawbridgeworth, Herts CM21 0BD (GB)
(74) Representative: Laurence, Simon French

(57) **Abstract**

In an optical transmission system two or more digital signals are multiplexed at a transmitter using one or more electrical sub-carriers before the multiplexed resultant is employed to modulate a single optical carrier for onward transmission to a receiver. The modulated optical carrier may be multiplexed with one or more similarly modulated other optical carriers, each of different wavelength.

## Description

### Background to the Invention

This invention relates to optical transmission systems, and is particularly concerned with problems arising as the result of dispersion in the transmission path between optical transmitter and receiver. These problems are bandwidth dependent, with the problems associated with chromatic dispersion generally increasing as the square of the optical signal bandwidth, and those associated with polarisation mode dispersion (PMD) generally increasing linearly. These problems mean that if a given system is operating satisfactorily in the transmission from an optical transmitter to a distant receiver of for instance 2.5 Gbit/s digital traffic modulating an optical carrier, the performance of that system will be degraded, and possibly to an unacceptable extent if the data rate impressed on the optical carrier were for instance increased from 2.5 Gbit/s to 10Gbit/s. One of the known ways of addressing this problem is to divide the 10 Gbit/s bit stream into four 2.5 Gbit/s streams to modulate a separate optical carrier and then to wavelength multiplex these four modulated carriers at the transmitter. They are then transmitted to the receiver in wavelength multiplexed form where they are wavelength demultiplexed.

A disadvantage of the approach to providing extra capacity without increasing the problems presented by dispersion in the transmission path is that n-way wavelength division multiplexing (WDM) requires the use of n different optical sources at the transmitter and, if these sources are not directly modulated, it additionally involves the use of n different modulators. This is liable to add significantly to the cost and complexity of the system. In the case of a transmission system using optical amplifiers in the transmission path, there are additional problems associated with variations in the spectral gain characteristic of those amplifiers.

### Summary of the Invention

The present invention is directed to a different way of providing the increased capacity. Used on its own, it can reduce the number of optical sources and external modulators required at the transmitter. Additionally it can be used in association with WDM to provide improved capacity over that provided by WDM alone.

According to the present invention there is provided an optical transmission system in which a plurality of two or more digital electrical signals is transmitted from a transmitter to a receiver via an optical transmission path that exhibits dispersion, which plurality of signals is transmitted in multiplexed form on a single optical carrier, wherein at least one of said plurality of signals is transmitted as modulation upon an electrical sub-carrier which in tum modulates said optical carrier, and wherein said at least one of said plurality of signals is detected at the receiver using single side-band demodulation of said modulated single optical carrier.

The invention also provides an optical transmission system in which each of n, where n≥2, electrical sub-carriers of different frequency is digitally modulated with an associated one of n different signals, and in which a single optical carrier is modulated with the resulting n digitally modulated electrical sub-carriers to provide spectrally separated signal bands on the optical carrier, wherein the modulated optical carrier is transmitted from a transmitter to a receiver via an optical transmission path that exhibits dispersion, and wherein at the receiver the signals are detected using single side-band demodulation of the modulated optical carrier.

When choosing suitable frequencies of sub-carrier for multiplexing the different digital signals, it will be evident that one of these digital signals may be left at base-band for multiplexing with the modulated sub-carriers that are modulated with the other digital signals. In these circumstances this one digital signal may be considered as modulating an electrical sub-carrier of zero frequency.

The invention further provides an optical transmission system in which a plurality of digital electrical signals are transmitted from a transmitter to a receiver via an optical transmission path exhibiting dispersion, which signals are formed into a plurality of groups, each of at least two of said signals, wherein the signals of each group are transmitted multiplexed on an optical carrier associated with that group wherein, in respect of each group, at least one signal of the group is transmitted as modulation upon an associated electrical sub-carrier that is itself transmitted as modulation upon said associated optical carrier, and wherein said at least one signal of the group is detected at the receiver using single side-band demodulation of said associated optical carrier.

### Brief Description of the Drawings

There follows a description of transmission systems embodying the invention in preferred forms. The description refers to the accompanying drawings in which:
- Figure 1: is a schematic representation of a transmission system employing a single optical carrier frequency in its transmission path,
- Figures 2a, 2b and 2c: depict, in respect of a first bit rate digital signal, the spectral characteristics in the system of Figure 1 respectively before modulation of the optical carrier, after such modulation, and after detection at the receiver,
- Figures 3a, 3b and 3c: depict equivalent topical characteristics in respect of a second higher bit-rate digital signal,
- Figure 4: is a schematic representation of a transmission system employing WDM in its transmission path,
- Figures 5a, 5b and 5c: depict spectral characteristics equivalent to those of Figures 2a, 2b and 2c, but in respect of wavelength division multiplexed signals applied to the transmission path of the system of Figure 4,
- Figures 6a, 6b and 6c: depict spectral characterisations equivalent to those of Figures 2a, 2b and 2c, but in respect of two multiplexed signals applied to modulate a single optical carrier, and
- Figures 76a, 7b and 7c,: depict spectral characterisations equivalent to those of Figures 2a, 2b and 2c, but in respect of four multiplexed signals applied to modulate a single optical carrier,

### Detailed Description of Preferred Embodiments

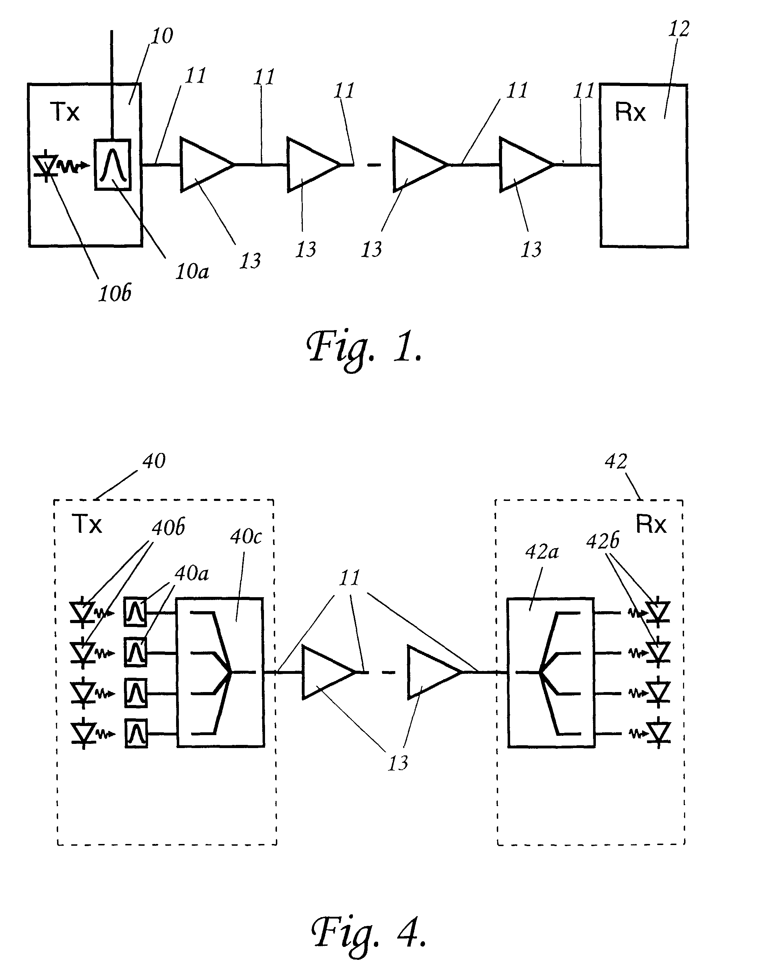

Referring to Figure 1, a transmitter 10, having an optical modulator 10a modulating the cw output of an optical source 10b, typically a diode laser, directs its output into a transmission path 11 to a receiver 12. Typically, but not necessarily the transmission path 11 may include amplifiers 13 at certain intervals along its length. The optical modulator may be of Mach Zehnder interferometer type in which an electrical input to an electro-optic element, constructed for instance in lithium niobate, is employed to control the magnitude of optical path length difference existing between the two interference arms of the modulator. Alternatively the modulator may be a modulator constructed in semiconductive material, for instance a quantum confined Stark effect modulator.

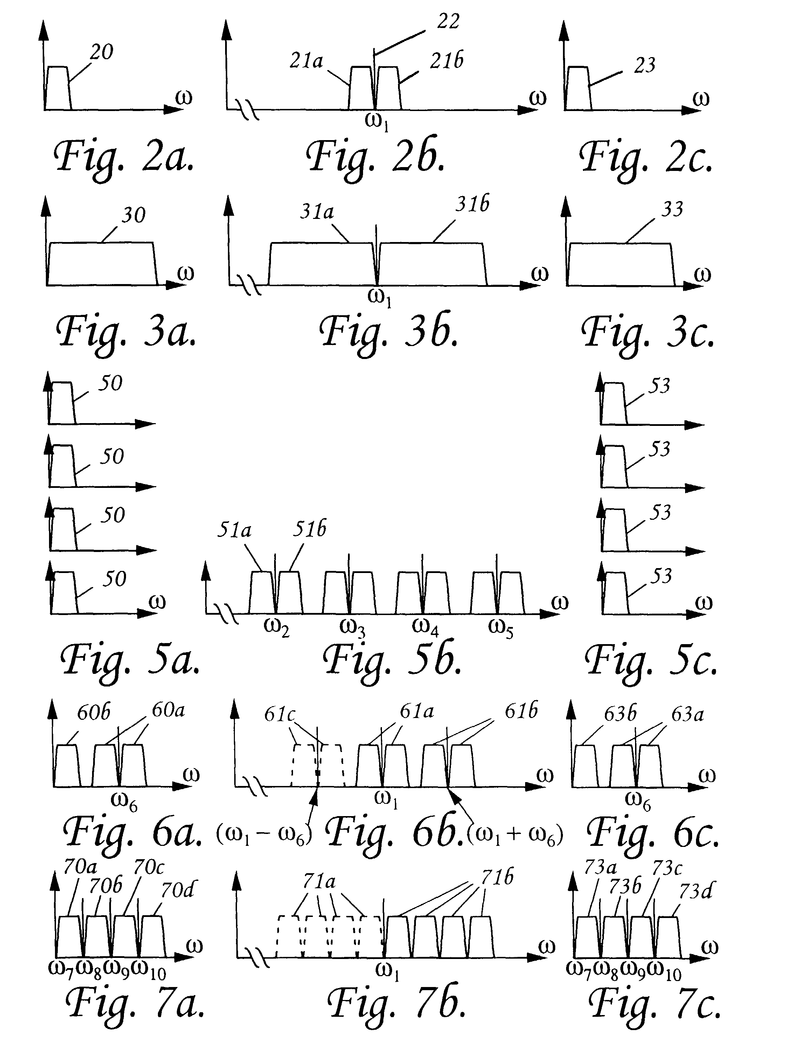

If the optical modulator 10a were to be supplied with a digitally modulated electrical signal for direct modulation of the optical carrier provided by the output of the optical source 10b, then this digitally modulated electrical signal would typically have a frequency spectrum as generally depicted at 20 in Figure 2a. Direct modulation of the optical carrier with the electrical signal will then produce an optical signal with an optical spectrum as depicted in Figure 2b, comprising side-bands 21a and 21b either side of the carrier frequency, and direct detection of this ω₁ optical signal at the receiver 12 will produce an electrical signal as depicted at 23 in Figure 2c.

If now it were desired to increase the bit rate by a substantial amount, for instance from 2.5 Gbit/s to 10Gbit/s, the width of each of the corresponding side-bands is correspondingly increased, as depicted respectively at 30, 31a and 31b, and 33 in Figures 3a, 3b and 3c. Obviously this calls for the modulator 10a of the transmitter 10 and the detector of the receiver 12 to be capable of operating at the faster bit rate, but a potentially more serious problem is that presented to the system by the dispersion of the transmission path 11 in its handling of the wider spectral range occupied by the side bands 31a and 31b. If the dispersion is too great for the higher bit rate, a known way of overcoming the problem is to have recourse to WDM. Instead of the transmitter having only a single source and modulator as depicted in Figure 1, the transmitter 40 of the WDM system depicted in Figure 4 has a plurality of cw sources 40b, emitting at different wavelengths, and modulators 40a, each handling a different portion of the bit stream. For instance for a 10Gbit/s bit stream there may be four sources emitting at frequencies ω₂, ω₃, ω₄ and ω₅, with the four associated modulators each handling 2.5 Gbit/s. The outputs of the modulators are fed to a multiplexer 40c to provide a single output from the transmitter for launching into the transmission path 11. At the far end of the transmission path is a receiver 42 that includes a corresponding demultiplexer 42a and a set of detectors 42b. The four electrical 2.5 Gbit/s signals applied to the four modulators 40a have frequency spectra as generally depicted at 50a, 50b, 50c and 50d in Figure 5a. Direct modulation of the four optical carriers provided by the four sources 40b produces, after they have been multiplexed by multiplexer 40c, an optical signal with an optical spectrum as depicted in Figure 5b comprising side-bands 51a and 51b either side of each of the four carrier frequencies ω₂, ω₃, ω₄ and ω₅ . The aggregate spread of these four pairs of side bands is greater than the corresponding spread of the single pair of bands 31a and 31b in Figure 3b, but since each pair of side-bands 51a and 51b is separately detected at the receiver, it is the spectral spread of just one of these pairs that defines the magnitude of the dispersion problem at the receiver rather than the aggregate spread. Detection at the receiver will produce the four electrical signals as depicted at 53 in Figure 5c.

The embodiment of the invention now to be described with reference to Figures 6a, 6b and 6c has a transmission system arrangement as described above with reference to Figure 1. Referring particularly to Figure 6a, a first 2.5 Gbit/s signal is employed to modulate an electrical sub-carrier of frequency ω₆ to produce a pair of side-bands 60a, and to this is added a second 2.5 Gbit/s signal. This second 2.5 Gbit/s signal can be considered as being a signal employed to modulate a base-band sub-carrier of frequency ω₀ = 0, thereby providing a single side-band 60b. The sub-carrier frequency ω₆ is chosen to be not smaller than the spectral width of side-band 60b so that there shall be no spectral overlap between the side-bands of the two 2.5 Gbit/s signals. Typically amplitude modulation is chosen for the modulation of the electrical sub-carriers, but frequency modulation and phase modulation constitute possible alternatives. This combined electrical signal of Figure 6a is applied to the modulator 10a of the transmitter to modulate the output of the optical source 10b, thereby producing a signal with an optical spectrum as depicted in Figure 6b comprising a first pair of pass-bands 61a astride the frequency ω₁ and further pairs 61b and 61c respectively astride the frequencies (ω₁ - ω₆) and (ω₁ + ω₆). At the receiver 12 direct detection of the optical signal spectrum of Figure 6b would produce the electrical signal spectrum of Figure 6c which comprises a pair of side-bands 63a astride a sub-carrier frequency ω₆ together with a further side-band 63b. However the side-bands 63a in this instance would be being constructed from side-bands 61a and side-bands 61c, and so would incur the dispersion penalty associated with the frequency range from just below (ω₁ - ω₆) to just above (ω₁ + ω₆).

Accordingly it is arranged that single side-band demodulation of the optical carrier is employed at least for the detection of the part of the spectrum of Figure 6b that derives from the 2.5 Gbit/s signal employed to modulate the electrical sub-carrier of frequency ω₆. If both pairs of side-bands 61b and 61c are transmitted to the detector, then one of them may be removed by optical filtering before performing the demodulation required to produce the side-bands 63a of Figure 6c. Since only one of the pairs of side-bands 61b and 61c is being employed at the detector, it may generally be preferred not to launch the unused pair into the transmission path 11 in the first instance, but to employ single side-band modulation at the transmitter. (In Figure 6b this is indicated by using broken lines to represent the side-bands 61c, while full files are used to represent the side-bands 61a). Alternatively, if both pairs of side-bands are transmitted to the receiver, both pairs may be separately detected. As the result of dispersion in the optical transmission path, one of the detected signals will be delayed with respect to the other, and so this other detected signal must itself be delayed before the two detected signals are combined. One method of providing single side-band amplitude modulation of the optical carrier at the transmitter is to sum the outputs of a frequency modulator and an amplitude modulator. Both such modulators produce upper and lower side-bands, but these are in phase with each other in the case of the amplitude modulator, and in anti phase in the case of the frequency modulator. Accordingly these two pairs of (identical frequency) side-bands may be summoned to cancel one of the side-bands to leave the other as a single side-band. An alternative approach is to dispense with the frequency modulator, and instead to remove, by optical filtering, one of the two side-bands produced by the amplitude modulator. At the receiver 12, side-band 63a is a replica of the second 2.5 Gbit/s signal applied to the modulator 10c of the transmitter. This is separated from side-bands 63a by electrical filtering, and the side-bands 63a are heterodyned with a local oscillator to produce a replica of the first 2.5 Gbit/s signal applied to the modulator 10a of the transmitter.

The embodiment described above with particular reference to Figures 6a, 6b and 6c illustrates the use of an electrical sub-carrier ω₆ which is modulated to produce upper and lower side-bands 60a, and it has been explained that the frequency of this sub-carrier has to be chosen such that these side-bands do not overlap side-band 60b. More efficient use of the electrical spectrum can be achieved if single side-band modulation of electrical sub-carriers is employed as illustrated in the embodiment now to be described with particular reference to Figures 7a, 7b and 7c. This assumes increasing importance as the number of electrical sub-carriers modulating a particular optical carrier is increased.

Figure 7a depicts the electrical spectrum of the electrical modulation applied to the modulator 10a of the system's transmitter 10. This spectrum is composed of four bands 70a, 70b, 70c and 70d produced by the multiplexing of four 2.5 Gbit/s digital signals. Band 70a is constituted either directly by the first of the four digital signals, or by a single side-band modulation of an electrical sub-carrier of frequency ω₇ with that first digital signal. The bands 70b, 70c and 70d are constituted by the single side-band modulation of three electrical sub-carriers of frequencies ω₈, ω₉, and ω₁₀ respectively with the second, third and fourth 2.5 Gbit/s signals. The frequencies ω₇, ω₈, ω₉ and ω₁₀ are chosen so that the bands 70a, 70b, 70c and 70d do not overlap. The modulator 10a modulates an optical carrier of frequency ω₁ provided by source 10b to provide a signal with an optical spectrum as depicted in Figure 7b comprising lower and upper side-bands 71a and 71b. At some stage, typically at the transmitter 10, but alternatively at any subsequent position prior to coherent detection in the receiver 12, one of these side-bands is suppressed. At the receiver 12, coherent detection using a local oscillator at frequency ω₁ produces an electrical output with a spectrum as depicted in Figure 7c having four bands 73a, 73b 73c and 73d. These are separated by filtering and, where required, are heterodyned with local oscillators to provide replicas of the individual four 2.5 Gbit/s signals multiplexed at the transmitter.

The embodiments of the present invention described above with particular reference to Figures 6a to 7c have each involved multiplexing different digital signals on to a single optical carrier. Further multiplexing capacity is possible in accordance with the teachings of the present invention by multiplexing different digital signals on to a single optical carrier, and then, as generally depicted in Figure 4, multiplexing this optical carrier with one or more other optical signals of different frequency. Each of these other optical signals, in its turn, may also be produced by multiplexing further different digital signals on to a respective single optical carrier, each of different frequency from each of the others.

## Claims

1. An optical transmission system in which a plurality of two or more digital electrical signals is transmitted from a transmitter (10) to a receiver (12) via an optical transmission path (11) that exhibits dispersion, which plurality of signals is transmitted in multiplexed form on a single optical carrier (ω₁), characterised in that at least one of said plurality of signals is transmitted as modulation upon an electrical sub-carrier (ω₆) which in turn modulates said optical carrier, and wherein said at least one of said plurality of signals is detected at the receiver using single side-band demodulation of said modulated single optical carrier.

2. A transmission system as claimed in claim 1, wherein at least one other of said plurality of signals is transmitted via the transmission path as base-band modulation upon said optical carrier.

3. An optical transmission system as claimed in claim 1, wherein said electrical sub-carrier is one of a set n, where n≥2, electrical sub-carriers of different frequency (ω₇, ω₈, ω₉ and ω₁₀), each digitally modulated with an associated one of n different signals, wherein said single optical carrier is modulated with the resulting n digitally modulated electrical sub-carriers to provide spectrally separated signal bands on said optical carrier, and wherein at the receiver each of said n signals are detected using single side-band demodulation of the modulated optical carrier.

4. A transmission system as claimed in claim 1, wherein said single optical carrier upon which said plurality of signals is transmitted via said optical transmission path wavelength multiplexed with at least one further optical carrier (ω₂, ω₃, ω₄, or ω₅) wherein the or each said further optical carrier is similarly modulated with an associated multiplexed further plurality of digital electrical signals, wherein at least one of said associated multiplexed further plurality of signals is similarly transmitted as modulation upon an electrical sub-carrier which in turn modulates said further optical carrier, and wherein said at least one of said associated multiplexed further plurality of signals is detected at the receiver using single side-band demodulation of said modulated further optical carrier.
